# FASCICULE DE BREVET EUROPEEN

(11) **EP 3 749 445 B1**
(45) Date de publication et mention de la délivrance du brevet: **25.01.2023**
(21) Numéro de dépôt: 19702100.9
(22) Date de dépôt: 04.02.2019
(51) Int. Cl.: B01J 8/24, C10G 11/18

(54) **DISPOSITIF D'INJECTION DE CHARGE D'UNE UNITE FCC**
AUSGANGSSTOFFINJEKTOR EINER FCC-EINHEIT
FEEDSTOCK INJECTION DEVICE OF AN FCC UNIT

(30) Priorité: 08.02.2018 FR 1851068
(43) Date de publication de la demande: 16.12.2020
(73) Titulaire: TotalEnergies OneTech, 92400 Courbevoie (FR)
(72) Inventeur: LESAGE, Romain, 2000 ANTWERPEN (BE); DECKER, Sébastien, 76930 Octeville sur Mer (FR); RABOIN, Jean-Christophe, 41600 CHAUMONT SUR THARONNE (FR); KERNEUR, Youen, 76620 LE HAVRE (FR)
(74) Mandataire: Largeau, Béatrice
(86) Numéro de dépôt international: PCT/EP2019/052595
(87) Numéro de publication internationale: WO 2019/154748

(56) Documents cités:
- WO-A1-2015/073133
- WO-A1-2015/170034
- WO-A1-2018/172473

## Description

La présente invention se rapporte à un dispositif d'injection, notamment un dispositif d'injection de charge d'hydrocarbures d'une unité de raffinage, en particulier une unité de craquage catalytique fluide (FCC « Fluid Catalytic Cracking » en anglais).

Les charges d'hydrocarbures liquides traitées dans les unités de raffinage sont généralement mises en contact avec un catalyseur solide qui va favoriser la ou les réactions chimiques de traitement de la charge. Afin d'améliorer ce contact et de maximiser le rendement des réactions, ces charges d'hydrocarbures liquides sont atomisées en fines gouttelettes par des dispositifs d'injection. Cette d'atomisation permet de maximiser la surface de contact liquide (charge d'hydrocarbures liquide) -solide (catalyseur), ce qui favorise le transfert de chaleur et donc la vaporisation de ces hydrocarbures qui réagissent alors en phase gazeuse au contact du solide (catalyseur). Bien qu'il n'existe pas de réel consensus concernant le diamètre optimum des gouttelettes, on recherche en général à former des gouttelettes dont le diamètre est du même ordre de grandeur que le diamètre des particules de catalyseur, à savoir moins de 200 microns, par exemple de l'ordre de 50 à 80 microns.

De manière générale, on utilise des dispositifs d'injection dits « diphasiques », lesquels présentent un corps creux globalement cylindrique et deux ouvertures d'entrée par lesquelles on injecte respectivement la charge d'hydrocarbures liquide et un gaz d'atomisation, généralement de la vapeur d'eau, à l'intérieur du corps. Une chambre de contact est ménagée à l'intérieur du corps, dans laquelle on met en contact la charge d'hydrocarbures et le gaz d'atomisation pour atomiser la charge d'hydrocarbures. Une fois atomisée, la charge d'hydrocarbures est éjectée via une ouverture de sortie débouchant à l'intérieur du réacteur. Chaque dispositif d'injection est implanté sur une paroi de réacteur de manière à ce qu'une extrémité du dispositif d'injection comprenant l'ouverture de sortie soit située à l'intérieur du réacteur.

On connait des dispositifs d'injection à impact dans lesquels la charge est introduite radialement dans le corps et impacte une cible située au centre du corps, engendrant la formation de gouttelettes. Un gaz d'atomisation circulant axialement permet d'entrainer ces gouttelettes en les divisant davantage vers la sortie du corps. On peut néanmoins observer un phénomène d'érosion de la cible, notamment lorsque la charge à injecter contient des particules, ce qui implique de renforcer la cible, augmentant davantage le coût.

Dans certains dispositifs d'injection, du gaz d'atomisation supplémentaire peut être injecté à l'intérieur du corps par un conduit entourant la cible : le gaz d'atomisation sort alors au niveau de la cible et vient impacter le liquide introduit par l'ouverture située en regard de la cible, favorisant l'atomisation du jet de liquide qu'il vient heurter frontalement. La chambre de mélange de ces dispositifs d'injection à double injection de gaz d'atomisation est néanmoins complexe et coûteuse à réaliser. Elle doit ainsi être réalisée séparément, puis solidarisée au corps creux du dispositif d'injection.

La demanderesse a également proposé dans le document WO2015/ 170034A1 des dispositifs d'injection permettant d'injecter plusieurs jets de liquide à l'intérieur du corps par deux ou plusieurs conduits radiaux. Ces dispositifs n'utilisent pas de cible interne sensible à l'érosion, mais la chambre de mélange reste complexe et coûteuse à réaliser. Le document WO2015 073133A1 concerne une buse d'injection permettant d'atomiser une charge liquide à l'intérieur d'un réacteur catalytique fluidisé. L'objectif de D1 est de réaliser une buse d'injection simple à réaliser et à assembler, qui permette d'améliorer le mélange et l'atomisation d'un flux liquide d'hydrocarbures et de gaz.

L'invention , qui est définie par les caractéristiques essentielles de la revendication 1, vise à pallier au moins en partie les inconvénients mentionnés ci-dessus. A cet effet, il est proposé un dispositif d'injection conformé pour atomiser un liquide en gouttelettes au moyen d'un gaz, comprenant un corps tubulaire creux s'étendant suivant une direction longitudinale et dont une paroi interne, notamment cylindrique, définit une première zone dite de contact et une deuxième zone située en aval de la première zone par rapport à un sens de circulation du liquide et du gaz à l'intérieur du corps, ce dernier présentant :
- au moins deux ouvertures d'entrée débouchant dans ladite première zone, pour injecter un liquide, lesdites ouvertures présentant chacune un axe orienté de sorte que des flux de liquide issus desdites ouvertures convergent sur une ligne longitudinale X s'étendant à l'intérieur du corps,
- une ouverture d'entrée débouchant dans ladite première zone, pour injecter un gaz d'atomisation à l'intérieur de la première zone,
- au moins un orifice de sortie situé en aval des première et deuxième zones pour évacuer le liquide atomisé hors du corps.

Selon l'invention, le corps présente une section interne variant de manière continue ou constante sur toute sa longueur et la paroi interne du corps est pourvue, entre la première et la deuxième zone, d'au moins une chicane conformée de sorte que, dans chaque plan perpendiculaire à la direction longitudinale du corps contenant ladite chicane, celle-ci réduit une section interne du corps sur toute la périphérie de la paroi interne.

De manière usuelle, une chicane est un dispositif qui contrarie le cheminement d'un fluide en mouvement.

L'agencement particulier de l'invention permet de réaliser le corps de manière très simple sans nuire à la qualité d'atomisation du dispositif d'injection.

Le corps présente une section interne variant de manière continue, autrement dit sans variation brusque et sans épaulement. Le corps peut ainsi présenter une forme tronconique, cylindrique, ou similaire. De préférence, le corps présente une section interne constante. Il peut s'agir par exemple d'un cylindre ou similaire.

Le corps peut avantageusement être réalisé d'une seule pièce. En outre, la ou les chicanes peuvent être réalisées de manière simple. Une chicane peut, par exemple, se présenter sous la forme d'un simple anneau ou d'une bague inséré à l'intérieur du corps et fixé à ce dernier.

Le dispositif objet de la présente injection est notamment un dispositif dépourvu de cible interne. Notamment, chaque ouverture d'entrée est dépourvue d'une cible interne.

Dans un mode de réalisation de l'invention, la paroi interne est pourvue d'une unique chicane s'étendant notamment sur une longueur au moins égale à la dimension la plus grande d'une section du corps.

Cette chicane peut par exemple se présenter sous la forme d'une bague insérée à l'intérieur du corps dont elle épouse la paroi interne. La chicane présente un profil (en section longitudinale) irrégulier, notamment ondulé ou dentelé, suivant la direction longitudinale du corps. Cet agencement peut permettre d'améliorer la dispersion du flux en aval de la chicane.

Dans un autre mode de réalisation de l'invention, ladite paroi interne peut être pourvue d'une pluralité de chicanes disjointes. Ceci permet de faciliter le mélange des fluides sans pour autant augmenter la perte de charge, ce qui peut être particulièrement avantageux pour des charges lourdes.

Les caractéristiques ci-après, seules ou en combinaison, permettent également d'améliorer le mélange entre le liquide et le gaz sans augmenter de manière notable la perte de charge.

Ainsi, lorsque plusieurs chicanes sont présentes, chaque chicane peut avantageusement être espacée d'au moins une autre chicane suivant la direction longitudinale du corps.

Dans ce cas, les chicanes peuvent alors s'étendre sur une longueur du corps relativement réduite.

Plusieurs chicanes adjacentes présentent des hauteurs, mesurées perpendiculairement à la direction longitudinale du corps, non nulles et différentes. Ceci peut également permettre d'améliorer la dispersion du fluide.

Notamment, suivant la direction longitudinale du corps, les hauteurs de chicanes adjacentes peut être croissante jusqu'à atteindre un maximum et à décroitre.

Indépendamment du nombre de chicanes et de leur disposition, la ou les chicanes peuvent présenter différentes formes qui peuvent être éventuellement combinées.

Ladite au moins une chicane peut ainsi définir une paroi faisant saillie de la paroi interne et dont un bord est solidarisé à la paroi interne. Notamment, ce bord peut être solidarisé à la paroi interne le long d'une ligne, qui peut s'étendre dans un plan perpendiculaire à la direction longitudinale dudit corps ou onduler de part et d'autre de ce plan.

La paroi définie par ladite au moins une chicane peut en outre présenter un bord libre distant de la paroi interne dentelé ou crénelé.

Ladite au moins une chicane peut présenter des orifices la traversant de part en part.

La paroi définie par chaque chicane peut être une paroi plane, simple à réaliser, une paroi ondulée, ou encore une paroi incurvée.

Ladite au moins une chicane peut présenter, du côté des ouvertures d'entrée, une face incurvée agencée pour diriger un fluide impactant cette face vers l'intérieur du corps, ce qui peut permettre d'améliorer le mélange.

Quelle que soit sa forme (incurvée ou plane), une chicane (ou sa tangente en son point de jonction avec la paroi interne du corps) peut définir un angle prédéterminé par rapport à un plan orthogonal à la direction longitudinale du corps. Cet angle peut être variable pour une même chicane.

Quelle que soit la forme (incurvée ou plane) d'une chicane, son bord libre (opposé à son bord solidaire de la paroi interne du corps) peut présenter une ou deux faces de forme arrondie ou en biseau.

De manière générale, la ou les chicanes peuvent présenter une hauteur, mesurée perpendiculairement à la direction longitudinale du corps, non nulle. Avantageusement, cette hauteur est égale au plus à 1/2 de la dimension interne maximale du corps perpendiculairement à la direction longitudinale du corps. De préférence cette hauteur est égale au plus à 1/4 de la dimension interne maximale du corps, voire à 1/8^{ème} de cette dimension maximale, par exemple de l'ordre de 1/10^{ème} de cette dimension maximale. Cette hauteur peut en outre être variable pour une même chicane.

De manière générale, hormis pour une unique chicane s'étendant sur une longueur, suivant la direction longitudinale, au moins égale à une dimension interne maximale du corps mesurée perpendiculairement à la direction longitudinale, la ou les chicanes peuvent présenter une épaisseur (ou longueur), mesurée suivant la direction longitudinale du corps, non nulle. Avantageusement, cette épaisseur est d'au plus 35mm, de préférence d'au plus 31mm, voire d'au plus 20mm ou d'au plus 16mm. L'épaisseur peut être dans une gamme de valeurs définie par toute combinaison des limites précitées. Cette épaisseur peut par exemple être de l'ordre de 10mm.

L'invention est maintenant décrite en référence aux dessins annexés, non limitatifs, dans lesquels :
- la figure 1 illustre une représentation schématique en coupe longitudinale d'un dispositif d'injection selon un mode de réalisation montré pour exemple ;
- la figure 2a est une vue en coupe selon la ligne AA d'une chicane de la figure 1 selon un mode de réalisation ;
- les figures 2b, 2c et 2d sont des vues en coupe similaires à celles de la figure 2a selon d'autres modes de réalisation ;
- la figure 3 représente partiellement une coupe longitudinale d'un dispositif d'injection selon une autre variante ;
- la figure 4 représente partiellement une coupe longitudinale d'un dispositif d'injection selon une alternative de l'invention ;
- la figure 5 représente une vue de face (suivant l'axe longitudinal X) de plusieurs chicanes selon une autre variante ;
- la figure 6 représente une vue de face (suivant l'axe longitudinal X) d'une seule et même chicane selon une autre variante, ainsi que les vues en coupe suivant deux directions distinctes A'A et B'B perpendiculaires à la direction longitudinale ;
- les figures 7 et 8 représentent partiellement des vues en coupe longitudinale de chicanes présentant des bords libres de formes différentes,
- la figure 9 représente partiellement une coupe longitudinale d'un dispositif d'injection selon l'autre alternative de l'invention.

Sur les différentes figures, les éléments identiques portent les mêmes références.

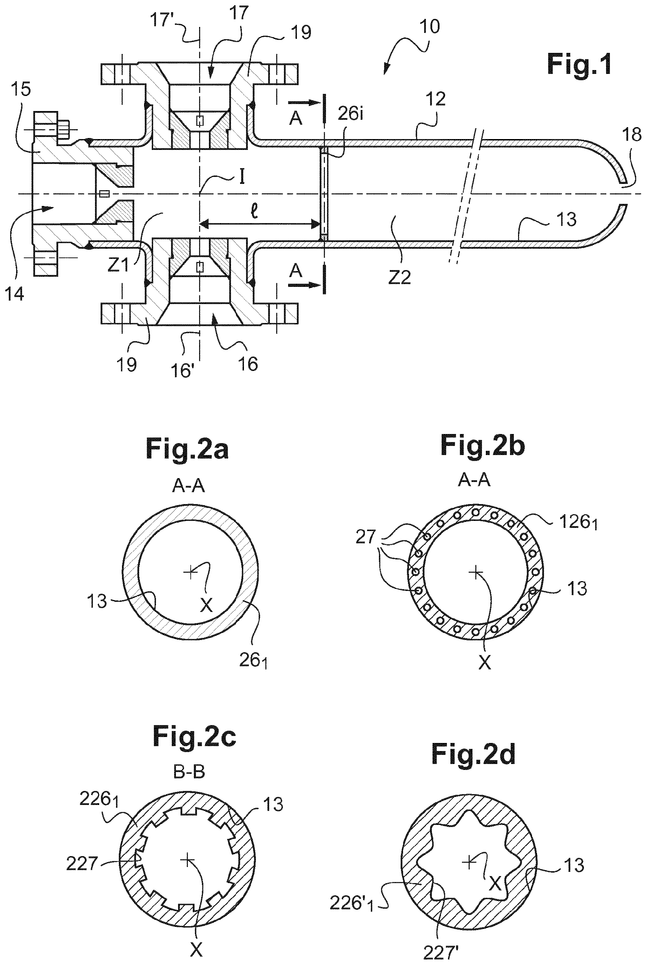

La figure 1 représente schématiquement un dispositif d'injection 10 lequel présente un corps tubulaire creux 12 s'étendant suivant une direction longitudinale X.

Le corps 12 comporte une paroi interne 13 laquelle définit une première zone Z1 dite de contact et une deuxième zone Z2 située en aval de la première zone Z1 par rapport à un sens de circulation du liquide et du gaz à l'intérieur du corps (ici de gauche à droite sur la figure 1).

Le dispositif d'injection 10 présente en outre :
- une ouverture d'entrée 14 débouchant dans la première zone Z1, pour injecter un gaz d'atomisation à l'intérieur de la première zone,
- une deuxième ouverture d'entrée 16 débouchant dans ladite première zone Z1 pour injecter un liquide à l'intérieur de la première zone,
- une troisième ouverture d'entrée 17 débouchant dans la première zone Z1, également pour injecter un liquide à l'intérieur de la première zone,
- au moins un orifice de sortie 18 situé en aval des première et deuxième zones pour évacuer le liquide atomisé hors du corps.

La première ouverture 14 est ainsi destinée à être raccordée à un conduit d'alimentation d'un gaz, tandis que les ouvertures 16 et 17 sont destinées à être raccordées à un conduit d'alimentation de liquide. Tel que décrit dans le document WO2015/170034A1 (incorporé par référence) un unique conduit d'alimentation de liquide peut être prévu, lequel alimente une chambre communiquant avec les ouvertures 16 et 17, ou un conduit d'alimentation par ouverture peut être prévu.

Les deuxième et troisième ouvertures 16, 17 présentent chacune un axe 16', 17'. Ces axes 16', 17' sont orientés de sorte que des flux de liquide issus des ouvertures 16, 17 convergent sur une ligne longitudinale s'étendant à l'intérieur du corps, ici l'axe longitudinal X. Dans cet exemple, les axes 16', 17' s'étendent perpendiculairement à la direction longitudinale du corps et sont agencées de sorte que leurs axes 16', 17' se coupent en un seul et même point I sur l'axe longitudinal X. L'invention n'est pas limitée à ce mode de réalisation, pourvu que les flux ou jets de liquides issus des ouvertures convergent les uns vers les autres et s'impactent sur une ligne longitudinale interne au corps.

A l'intérieur du corps 12, les fluides circulent des ouvertures d'entrée 14-17 vers l'orifice de sortie 18.

Ici, la première zone Z1 et la deuxième zone Z2 se présentent sous la forme d'une conduite interne rectiligne reliant la première ouverture d'entrée 14 à l'orifice de sortie 18 suivant une direction axiale dudit corps. Cette conduite interne présente dans cet exemple un diamètre interne constant. L'invention n'est toutefois pas limitée par ce mode de réalisation. La section interne de cette conduite (autrement dit du corps) pourrait varier de manière continue ou être constante sur toute la longueur de la conduite (i.e. du corps), sans toutefois être circulaire.

Dans le mode de réalisation représenté, le corps 12 est un cylindre, autrement dit, la paroi interne 13 est ici cylindrique, d'axe confondu avec la direction longitudinale X du corps. On notera que le corps 12 est réalisé d'une pièce. On pourrait néanmoins le réaliser en deux ou plusieurs parties soudées. L'ouverture 14, d'une part, et les ouvertures 16, 17, d'autre part reçoivent chacune un élément 15, 19 respectivement pour l'introduction des fluides. On notera que ces éléments ne font pas saillie à l'intérieur du corps. Cet agencement peut être prévu pour un corps non cylindrique.

Les jets de liquide entrant par les ouvertures 16 et 17 sont projetés l'un vers l'autre et se percutent sensiblement au niveau du point I. Les jets de liquide éclatés sont emportés sous forme de gouttelettes par un courant de gaz d'atomisation introduit à haute vitesse par l'ouverture 14. L'atomisation du liquide s'effectue en deux fois. Une première partie de l'atomisation se produit au niveau du point I par impact des jets l'un contre l'autre. Les jets de liquide ainsi éclatés sont cisaillés par le gaz entrant par le gaz introduit par l'ouverture 14. La deuxième partie de l'atomisation se produit au niveau de l'orifice de sortie 18 de diamètre réduit, où le rétrécissement du diamètre accélère les fluides.

Dans l'exemple représenté, les deux ouvertures 16, 17 sont en regard l'une de l'autre (leurs axes 16', 17' sont confondus). On pourrait toutefois prévoir d'avantage d'ouvertures pour le liquide, par exemple 3 ou 4, voire plus, disposées de manière à ce que les jets de liquide se percutent au point I de l'axe X, dans le flux de gaz entrant par l'ouverture 14. De manière générale, le liquide est ainsi injecté radialement à l'intérieur du corps, lequel est dépourvu de cible.

Selon l'invention, qui est définie par les caractéristiques essentielles de la revendication 1, la paroi interne 13 du corps est en outre pourvue entre la première zone Z1 et la deuxième zone Z2, d'au moins une chicane 26ᵢ (où i, le nombre de chicanes, est un nombre entier non nul). Cette chicane réduisant localement le diamètre de la paroi interne 13, perturbe le mouvement du fluide, favorisant le mélange. Notamment, la présence de chicane permet d'éviter la formation d'un film de liquide sur la paroi en ramenant le liquide dans l'axe du flux de gaz.

Une ou plusieurs chicanes peuvent être prévues selon le deux alternatives de la revendication 1.

Le dispositif d'injection 10 , montré uniquement à titre d'exemple, peut ainsi comprendre une unique chicane 26₁, tel que représenté figure 2a, située au niveau de la ligne de coupe A-A de la figure 1. Cette chicane 26₁ se présente sous la forme d'un anneau plein s'étendant sur toute la périphérie de la paroi interne 13. Ici, la chicane 26₁ définit une paroi s'étendant perpendiculairement à la direction longitudinale X.

Les figures 2, 3, 5 à 88 représentent d'autres modes de réalisation des chicanes qui diffèrent de ceux précédemment décrits par le nombre et/ou la forme des chicanes. Sur ces figures, les chicanes sont désignées par la référence « 26i » ou « J26i », l'indice « i », nombre entier non nul, représentant le nombre de chicanes, des modes de réalisation différents de ceux précédemment décrits étant signalés par J (nombre entier de 1 à 6 dans les exemples), les variantes d'un même mode de réalisation étant signalés par les signes prime ('), double prime (").

La figure 2b est une vue en coupe d'une chicane selon un autre mode de réalisation, dans lequel la chicane 126₁ est perforée. Des orifices 27 la traversent de part en part, permettant le passage du fluide. Cet agencement permet d'améliorer la dispersion du fluide en aval de la chicane, perturbe moins l'écoulement du fluide, tout en recentrant celui-ci vers l'axe du corps 12.

Les figures 2c et 2d sont des vues en coupe d'une chicane selon un autre mode de réalisation, dans lequel la chicane 226₁, 226'₁ présente un bord libre 227, 227' respectivement, distant de la paroi interne 13 qui est soit dentelé (chicane 226₁) soit crénelé (chicane 226'₁). Ces agencements ont un effet similaire que celui de la figure 2b.

Dans l'exemple représenté figure 1 et figures 2a-2d, les chicanes se présentent sous la forme de parois planes perpendiculaires à la direction longitudinale X. Autrement dit, un bord de la paroi de chaque chicane est ainsi solidarisé à la paroi interne 13 le long d'une ligne s'étendant dans un plan perpendiculaire à la direction longitudinale dudit corps.

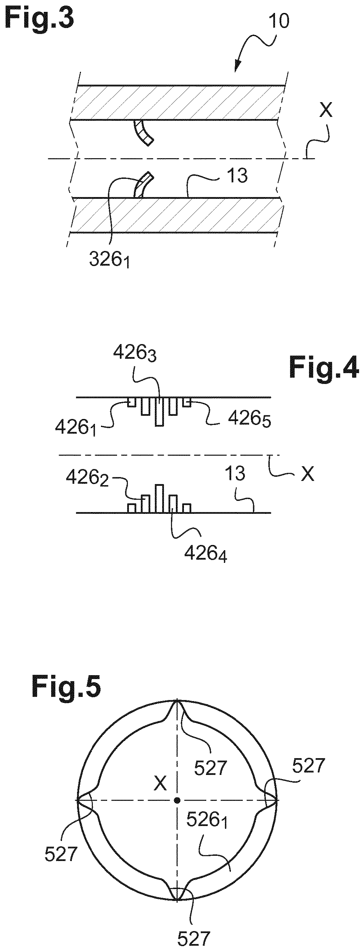

Ces parois pourraient également être incurvées. Ainsi, la figure 3 représente partiellement en coupe axiale le dispositif d'injection 10 pourvu d'une chicane 326₁ incurvée, notamment en direction de l'axe central longitudinal du corps 12. Ici, la concavité de la chicane est orientée vers l'orifice de sortie 18. On pourrait néanmoins prévoir qu'elle soit orientée dans la direction opposée. On pourrait également prévoir qu'une même chicane présente des parties incurvées dans des directions opposées.

Une seule chicane est représenté dans les exemples des figures 1, 2a-2d, 3, d'autres chicanes 26ᵢ, 126ᵢ, 226ᵢ, 226'ᵢ, 326ᵢ espacées suivant X pourraient néanmoins être prévues.

Le mode de réalisation de la figure 4, qui montre une alternative de l'invention, montre 5 chicanes 426₁, 426₂, 426₂, 426₄, 426₅, espacées suivant la direction longitudinale X du corps 14. On notera que chaque chicane présente une hauteur constante sur toute sa périphérie (comme dans l'exemple de la figure 2a), mais que les chicanes adjacentes présentent des hauteurs différentes. Dans l'exemple, les hauteurs des chicanes sont croissantes jusqu'à atteindre un maximum et à décroitre.

Quelque soit le mode de réalisation, la ou les chicanes peuvent présenter une dimension radiale ou hauteur (perpendiculairement à la direction longitudinale X) relativement faible, par exemple inférieure à 1/8^{ème} du diamètre de la paroi interne 13, voire de l'ordre de 1/10^{ème} de ce diamètre, mais non nulle. Cette hauteur peut présenter une valeur dans un intervalle défini par toute combinaison des limites précitées.

Cette hauteur peut être différente d'une chicane à l'autre, comme dans le mode de réalisation de la figure 4. Cette hauteur peut également être variable le long de la périphérie d'une chicane, tel que dans les exemples des figures 2c, 2d et 5. Sur la figure 5, sur la chicane 526₁ présente 4 échancrures 527 au niveau desquelles sa hauteur est réduite, mais non nulle.

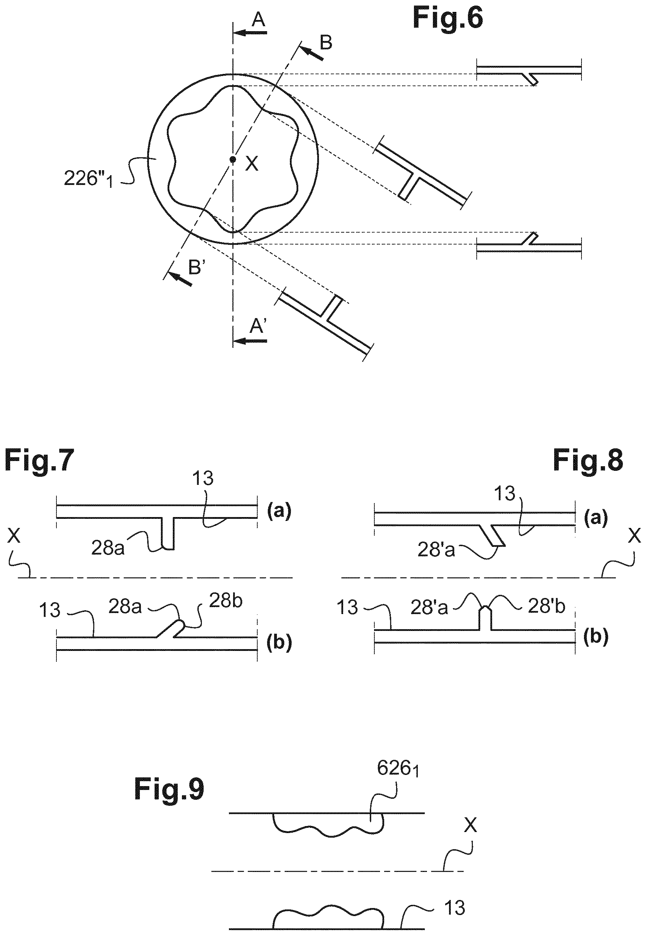

On notera que, quelle que soit sa forme (incurvée ou plane), une chicane (ou sa tangente en son point de jonction avec la paroi interne 13 du corps) peut définir un angle prédéterminé par rapport à un plan orthogonal à la direction longitudinale du corps (voir fig.3, 6, 7(b) et 8(a)). Cet angle peut être variable pour une même chicane 226"₁, tel que visible sur la figure 6.

La ou les chicanes ainsi inclinées peuvent être inclinées en direction de l'orifice de sortie 18.

Quelle que soit sa forme (incurvée ou plane), le bord libre d'une chicane (opposé à son bord solidaire de la paroi interne du corps) peut présenter une face 28a de forme arrondie (fig. 7(a)), une face 28'a en biseau (fig.7(b)), deux faces 28a, 28b de formes arrondies (fig.8(a)) ou deux faces 28'a, 28'b en biseau (fig.8(b)).

Lorsqu'une seule face est prévue, elle est de préférence située du côté de la zone de mélange Z1 suivant la direction longitudinale X.

L'épaisseur (ou longueur) des chicanes précédemment décrite, mesurée suivant la direction longitudinale X du corps, non nulle, est par exemple d'au plus 16 à 35mm.

On notera que la ou les chicanes décrites en référence aux figures 1, 2a-2d, et 3 à 8 définissent une paroi (plane ou non) dont la dimension suivant la direction longitudinale X est inférieure à la dimension suivant une direction perpendiculaire à la direction longitudinale. Dans le mode de réalisation de la figure 9, la chicane ne définit plus une paroi dans la mesure où la longueur (suivant la direction longitudinale X) est supérieure à sa dimension perpendiculairement à la direction longitudinale X.

Dans le mode de réalisation représenté figure 9, qui montre une alternative de l'invention, la paroi interne 13 est ainsi pourvue d'une unique chicane 626₁ s'étendant sur une longueur, suivant la direction longitudinale, au moins égale à une dimension interne maximale du corps mesurée perpendiculairement à la direction longitudinale, autrement dit, au diamètre interne du corps dans cet exemple. On notera en outre que la chicane 626₁ présente un profil irrégulier suivant la direction longitudinale du corps. Ainsi, sa hauteur est variable suivant la direction X. la forme de ce profil peut être adaptée : il peut être similaire au profil général des 5 chicanes de la figure 4 ou former des ondulations, tel que représenté sur la figure 9. En outre, la hauteur de la chicane pourrait également être variable dans chaque section transversale de la chicane.

La ou les chicanes sont disposées entre les première et deuxième zones Z1, Z2. Typiquement, la deuxième zone a une longueur (suivant la direction longitudinale X) de 2 à 10 fois supérieure à la longueur de la première zone. La ou les chicanes, notamment la première chicane, peuvent être situées à une distance « 1 » de l'axe des ouvertures 16, 17 de la dimension interne maximale de la section interne du corps (ici le diamètre), voire inférieure à la dimension interne maximale de la section interne du corps , au niveau de la première zone, par exemple à une distance correspondant à ¾ de cette dimension interne maximale (pour des raisons de clarté, l'échelle n'est pas respectée sur les figures).

Les chicanes précédemment décrites peuvent être réalisées d'une pièce avec le corps 12, par exemple par moulage ou usinage, ou être des éléments rapportés fixés, par exemple soudés, maintenus entre des brides, ou autre. Lorsque plusieurs chicanes sont présentes, elles peuvent être identiques ou différentes, les différentes formes et dispositions de chicanes précédemment décrites pouvant être combinées selon l'objet des revendications.

## Revendications

1. Dispositif d'injection (10) conformé pour atomiser un liquide en gouttelettes au moyen d'un gaz, comprenant un corps tubulaire creux (12) s'étendant suivant une direction longitudinale (X) et dont une paroi interne (13) définit une première zone dite de contact (Z1) et une deuxième zone (Z2) située en aval de la première zone par rapport à un sens de circulation du liquide et du gaz à l'intérieur du corps, ce dernier présentant :
- au moins deux ouvertures d'entrée (16, 17) débouchant dans ladite première zone (Z1), pour injecter un liquide à l'intérieur de la première zone, lesdites ouvertures présentant chacune un axe orienté de sorte que des flux de liquide issus desdites ouvertures convergent sur une ligne longitudinale (X) s'étendant à l'intérieur du corps,
- une ouverture d'entrée (14) débouchant dans ladite première zone (Z1), pour injecter un gaz d'atomisation à l'intérieur de la première zone,
- au moins un orifice de sortie (18) situé en aval des première et deuxième zones pour évacuer le liquide atomisé hors du corps,
**caractérisé en ce que** le corps présente une section interne variant de manière continue ou constante sur toute sa longueur et la paroi interne (13) du corps est pourvue, entre la première et la deuxième zone, d'au moins une chicane (26ᵢ, 126₁, 226₁, 226'₁, 226"₁, 326₁, 426ᵢ, 526ᵢ, 626₁) conformée de sorte que, dans chaque plan perpendiculaire à la direction longitudinale du corps contenant ladite chicane, celle-ci réduit une section interne du corps sur toute la périphérie de la paroi interne, et
**en ce que** la paroi interne est pourvue d'une unique chicane (626₁) s'étendant notamment sur une longueur, suivant la direction longitudinale, au moins égale à une dimension interne maximale du corps mesurée perpendiculairement à la direction longitudinale, ladite chicane (626₁) présentant un profil irrégulier suivant la direction longitudinale du corps,
ou **en ce que** ladite paroi interne (13) est pourvue d'une pluralité de chicanes (26ᵢ, 126₁, 226₁, 226'₁, 226"₁, 326₁, 426i, 526ᵢ) disjointes et plusieurs chicanes adjacentes (426ᵢ) présentent des hauteurs, mesurées perpendiculairement à la direction longitudinale du corps, non nulles et différentes.

2. Dispositif d'injection (10) selon la revendication 1, **caractérisé en ce que** la paroi interne (13) est pourvue d'une pluralité de chicanes et au moins une chicane (26ᵢ) est espacée d'au moins une autre chicane suivant la direction longitudinale du corps.

3. Dispositif d'injection (10) selon la revendication 1 ou 2, **caractérisé en ce que** la paroi interne (13) est pourvue d'une pluralité de chicanes et, suivant la direction longitudinale du corps, les hauteurs de chicanes adjacentes (426ᵢ) est croissante jusqu'à atteindre un maximum et à décroitre.

4. Dispositif d'injection (10) selon l'une quelconque des revendications 1 à 3, **caractérisé en ce que** la paroi interne (13) est pourvue d'une pluralité de chicanes et ladite au moins une chicane (26ᵢ, 126₁, 226₁, 226'₁, 226"₁, 326₁, 426i, 526ᵢ) définit une paroi faisant saillie de la paroi interne et dont un bord est solidarisé à la paroi interne.

5. Dispositif d'injection (10) selon la revendication 4, **caractérisé en ce que** la paroi définie par ladite au moins une chicane (226₁, 226'₁, 226"₁) présente un bord libre (227, 227') distant de la paroi interne dentelé ou crénelé.

6. Dispositif d'injection (10) selon la revendication 4 ou 5, **caractérisé en ce que** ladite au moins une chicane (126₁) présente des orifices (27) la traversant de part en part.

7. Dispositif d'injection (10) selon l'une quelconque des revendications 1 à 6, **caractérisé en ce que** la ou les chicanes (26ᵢ, 126₁, 226₁, 226'₁, 226"₁, 326₁, 426i, 526ᵢ, 626₁) présentent une hauteur, mesurée perpendiculairement à la direction longitudinale du corps, non nulle, égale au plus à 1/2 d'une dimension interne maximale du corps perpendiculairement à la direction longitudinale du corps, de préférence égale au plus à ¼ de cette dimension interne maximale, davantage de préférence égale au plus à 1/8^{ème} de cette dimension interne maximale.

8. Dispositif d'injection (10) selon l'une quelconque des revendications 1 à 7, **caractérisé en ce que** ladite au moins une chicane (326₁) présente, du côté des ouvertures d'entrée, une face incurvée agencée pour diriger un fluide impactant la face vers l'intérieur du corps.

## Patentansprüche

1. Injektionsvorrichtung (10), die angepasst ist, um eine Flüssigkeit anhand eines Gases in Tröpfchen zu zerstäuben, einen rohrförmigen Hohlkörper (12) umfassend, der sich entlang einer Längsrichtung (X) erstreckt, und eine Innenwand (13) desselben eine erste sogenannte Kontaktzone (Z1) und eine zweite Zone (Z2) definiert, die sich stromabwärts der ersten Zone in Bezug auf eine Zirkulationsrichtung der Flüssigkeit und des Gases im Inneren des Körpers befindet, wobei letzterer Folgendes aufweist:
- mindestens zwei Eingangsöffnungen (16, 17), die in die erste Zone (Z1) münden, um eine Flüssigkeit ins Innere der ersten Zone zu injizieren, wobei die Öffnungen jeweils eine Achse aufweisen, die derart ausgerichtet ist, dass Flüssigkeitsströme, die aus den Öffnungen stammen, auf einer Längslinie (X) zusammenlaufen, die sich im Inneren des Körpers erstreckt,
- eine Eingangsöffnung (14), die in die erste Zone (Z1) mündet, um ein Zerstäubungsgas ins Innere der ersten Zone zu injizieren,
- mindestens eine Ausgangsöffnung (18), die sich stromabwärts der ersten und zweiten Zone befindet, um die zerstäubte Flüssigkeit aus dem Körper auszutragen,
**dadurch gekennzeichnet, dass** der Körper einen Innenquerschnitt aufweist, der über seine gesamte Länge hinweg fortlaufend oder konstant variiert, und die Innenwand (13) des Körpers zwischen der ersten und der zweiten Zone mit mindestens einer Schikane (26ᵢ, 126₁, 226₁, 226'₁, 226"₁, 326₁, 426ᵢ, 526ᵢ, 626₁) versehen ist, die derart angepasst ist, dass in jeder Ebene senkrecht zur Längsrichtung des Körpers, der die Schikane enthält, diese einen Innenquerschnitt des Körpers über den gesamten Umfang der Innenwand hinweg verringert, und
dadurch, dass die Innenwand mit einer einzigen Schikane (626₁) versehen ist, die sich insbesondere über eine Länge, die der Längsrichtung folgt, mindestens gleich einer maximalen Innenabmessung des Körpers erstreckt, die senkrecht zur Längsrichtung gemessen wird, wobei die Schikane (626₁) entlang der Längsrichtung des Körpers ein unregelmäßiges Profil aufweist,
oder dadurch, dass die Innenwand (13) mit einer Vielzahl von getrennten Schikanen (26ᵢ, 126₁, 226₁, 226'₁, 226"₁, 326₁, 426ᵢ, 526ᵢ) und mehreren angrenzenden Schikanen (426ᵢ) versehen ist, die Höhen, die senkrecht zur Längsrichtung des Körpers gemessen werden, aufweisen, die ungleich null und unterschiedlich sind.

2. Injektionsvorrichtung (10) nach Anspruch 1, **dadurch gekennzeichnet, dass** die Innenwand (13) mit einer Vielzahl von Schikanen versehen ist, und mindestens eine Schikane (26ᵢ) von mindestens einer weiteren Schikane entlang der Längsrichtung des Körpers beabstandet ist.

3. Injektionsvorrichtung (10) nach Anspruch 1 oder 2, **dadurch gekennzeichnet, dass** die Innenwand (13) mit einer Vielzahl von Schikanen versehen ist, wobei die Höhen angrenzender Schikanen (426ᵢ) entlang der Längsrichtung des Körpers ansteigend sind, bis ein Maximum erreicht wird, und wieder abnehmen.

4. Injektionsvorrichtung (10) nach einem der Ansprüche 1 bis 3, **dadurch gekennzeichnet, dass** die Innenwand (13) mit einer Vielzahl von Schikanen versehen ist, und die mindestens eine Schikane (26ᵢ, 126₁, 226₁, 226'₁, 226"₁, 326₁, 426ᵢ, 526ᵢ) eine Wand definiert, die aus der Innenwand hervorsteht, und von der ein Rand fest mit der Innenwand verbunden ist.

5. Injektionsvorrichtung (10) nach Anspruch 4, **dadurch gekennzeichnet, dass** die durch die mindestens eine Schikane (226₁, 226'₁, 226"₁) definierte Wand einen von der Innenwand beabstandeten gezackten oder gekerbten freien Rand (227, 227') aufweist.

6. Injektionsvorrichtung (10) nach Anspruch 4 oder 5, **dadurch gekennzeichnet, dass** die mindestens eine Schikane (126₁) Öffnungen (27) aufweist, die sie von einer Seite zur anderen durchquert.

7. Injektionsvorrichtung (10) nach einem der Ansprüche 1 bis 6, **dadurch gekennzeichnet, dass** die Schikane oder Schikanen (26ᵢ, 126₁, 226₁, 226'₁, 226"₁, 326₁, 426ᵢ, 526ᵢ, 626₁) eine Höhe, die senkrecht zur Längsrichtung gemessen wird, ungleich null, höchstens gleich ½ einer maximalen Innenabmessung des Körpers senkrecht zur Längsrichtung des Körpers, vorzugsweise höchstens gleich ¼ dieser maximalen Innenabmessung, noch bevorzugter höchstens gleich 1/8 dieser maximalen Innenabmessung aufweisen.

8. Injektionsvorrichtung (10) nach einem der Ansprüche 1 bis 7, **dadurch gekennzeichnet, dass** die mindestens eine Schikane (326₁) auf Seiten der Eingangsöffnungen eine gekrümmte Fläche aufweist, die angeordnet ist, um ein Fluid, das auf die Fläche auftrifft, ins Innere des Körpers zu leiten.

## Claims

1. Injection device (10) conformed for atomising a liquid into droplets by means of a gas, comprising a hollow tubular body (12) extending in a longitudinal direction (X) and an internal wall (13) of which defines a first so-called contact zone (Z1) and a second zone (Z2) located downstream of the first zone with respect to a direction of circulation of the liquid and of the gas inside the body, the latter having:
- at least two inlet openings (16, 17) emerging in said first zone (Z1), for injecting a liquid inside the first zone, said openings each having an axis oriented so that flows of liquid coming from said openings converge on a longitudinal line (X) extending inside the body,
- an inlet opening (14) emerging in said first zone (Z1), for injecting an atomisation gas inside the first zone,
- at least one outlet orifice (18) located downstream of the first and second zones for discharging the atomised liquid out of the body, **characterised in that** the body has an internal cross section varying continuously or constantly over the entire length thereof and the internal wall (13) of the body is provided, between the first and the second zone, with at least one baffle (26ᵢ, 126₁, 226₁, 226'₁, 226"₁, 326₁, 426ᵢ, 526ᵢ, 626₁) conformed so that, in each plane perpendicular to the longitudinal direction of the body containing said baffle, the latter reduces an internal cross section of the body over the entire periphery of the internal wall, and
**in that** the internal wall is provided with a single baffle (626₁) extending in particular over a length, in the longitudinal direction, at least equal to a maximum internal dimension of the body measured perpendicularly to the longitudinal direction, said baffle (626₁) having an irregular profile in the longitudinal direction of the body,
or **in that** said internal wall (13) is provided with a plurality of separate baffles (26ᵢ, 126₁, 226₁, 226'₁, 226"₁, 326₁, 426ᵢ, 526ᵢ) and a plurality of adjacent baffles (426ᵢ) having heights, measured perpendicularly to the longitudinal direction of the body, that are non-zero and different.

2. Injection device (10) according to claim 1, **characterised in that** the internal wall (13) is provided with a plurality of baffles and at least one baffle (26ᵢ) is spaced apart from at least one other baffle in the longitudinal direction of the body.

3. Injection device (10) according to claim 1 or 2, **characterised in that** the internal wall (13) is provided with a plurality of baffles and, in the longitudinal direction of the body, the heights of adjacent baffles (426ᵢ) increase until they reach a maximum and decrease.

4. Injection device (10) according to any one of claims 1 to 3, **characterised in that** the internal wall (13) is provided with a plurality of baffles and said at least one baffle (26ᵢ, 126₁, 226₁, 226'₁, 226"₁, 326₁, 426ᵢ, 526ᵢ) defines a wall projecting from the internal wall and an edge of which is secured to the internal wall.

5. Injection device (10) according to claim 4, **characterised in that** the wall defined by said at least one baffle (226₁, 226'₁, 226"₁) has a free edge (227, 227') distant from the internal wall and jagged or crenellated.

6. Injection device (10) according to claim 4 or 5, **characterised in that** said at least one baffle (126₁) has orifices (27) passing right through it.

7. Injection device (10) according to any one of claims 1 to 6, **characterised in that** the baffle or baffles (26ᵢ, 126₁, 226₁, 226'₁, 226"₁, 326₁, 426ᵢ, 526ᵢ, 626₁) have a height, measured perpendicularly to the longitudinal direction of the body, that is non-zero, equal to no more than 1/2 of a maximum internal dimension of the body perpendicularly to the longitudinal direction of the body, preferably equal to no more than ¼ of this maximum internal dimension, more preferably equal to no more than 1/8^{th} of this maximum internal dimension.

8. Injection device (10) according to any one of claims 1 to 7, **characterised in that** said at least one baffle (326₁) has, on the inlet-opening side, a curved face arranged to direct a fluid impacting on the face towards the inside of the body.
